(19) Europäisches Patentamt
European Patent Office
Office européen des brevets

(11) **EP 3 018 872 A1**

(12) **EUROPEAN PATENT APPLICATION**

(43) Date of publication:
**11.05.2016 Bulletin 2016/19**

(51) Int Cl.:
**H04L 12/801** (2013.01)     *H04L 12/825* (2013.01)
**H04L 12/835** (2013.01)

(21) Application number: **15165538.8**

(22) Date of filing: **28.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.11.2014   GB 201419814**

(71) Applicant: **Nomad Spectrum Limited
Tyne and Wear NE1 3DQ (GB)**

(72) Inventor: **TIMMS, Martin
Northumberland, NE43 7UW (GB)**

(74) Representative: **Kenrick, Mark Lloyd
Marks & Clerk LLP
1 New York Street
Manchester M1 4HD (GB)**

(54) **DATA TRAFFIC PROCESSING AND ANALYSIS**

(57)     A method of analysing a stream of data packets received at a first device, each data packet within the stream of data packets having a respective sequence number. Each sequence number is associated with a respective position within the buffer. The method comprises, for each received data packet of said stream of data packets providing an indication of the receipt of the data packet at an associated position within a buffer. A head index is maintained at a position of the buffer associated with a received data packet having a highest sequence number and a tail index is maintained at a position of the buffer associated with a received data packet having a lowest sequence number. It is determining, for each position of the buffer through which the tail index passes, whether an indication of receipt is stored at that buffer position and updating a packets lost count when a buffer position does not store an indication of receipt.

FIG. 6

**Description**

The present invention is concerned with methods of analysing a stream of data sent across a network. The present invention may have particular, but not exclusive, application for analysing data packets sent from and to devices aboard vehicles.

With the increased portability of computers, and the increasing sophistication of mobile devices such as mobile telephones and "tablet" computers, there is a growing demand for connectivity while on the move allowing, for example, connection with other devices, and the Internet. While the speed of mobile telecommunications is now such that many networking applications, such as Web access and video streaming are feasible over mobile networks, other factors may limit the utility of mobile networks. For example mobile networks may suffer from incomplete geographic coverage. The problem of incomplete geographic coverage may be particularly problematic when a user is moving, given that data communication may be interrupted when a signal is lost (for example when a train enters a tunnel).

Further, different network operators may implement different traffic management policies in order to control traffic sent over their network. For example, where data traffic on a particular mobile network increases beyond a desired threshold, the network operator may take action to reduce traffic. One action that may be taken by a network operator is to "drop" one or more data packets that are passing through their network. For some data transfer protocols, such as User Datagram Protocol (UDP), determining whether a data packet has been lost may not be straightforward, and where loss is determined, distinguishing between loss caused by environmental reasons (such as incomplete geographic coverage) and loss caused by operator traffic management policies is difficult.

The limitations of systems based upon the connection of mobile devices to mobile telephone networks has led to the proposal that public transport vehicles, such as trains or buses, may be beneficially provided with wireless access points, such that mobile computing devices used by passengers traveling in the vehicle can be provided with data connectivity. More power is available on the vehicle than on a mobile computing device, meaning that systems fitted to vehicles can generally support larger, higher gain antennas than those that are generally installed in portable user devices such as mobile telephones. Furthermore, greater computational power can be used in signal processing in a device associated with a vehicle given that there is room for larger, more powerful processing devices.

It is known for vehicles to connect to base stations along a known route, for example alongside a train track. The base stations may be placed specifically for vehicles travelling along that route, or may be base stations of mobile network operators. It is further known for the vehicle to connect, via the connected base stations, to a home server. The home server may be connected to the Internet via standard means, for example via cable or via a digital subscriber line (DSL). A communication control unit is placed on the vehicle. As the vehicle travels along the route, the communication control unit wirelessly connects to a particular base station. In this way, the communication control unit can connect to the Internet through the home server, routed via the base stations and any intermediate devices in the network. The communication control unit is adapted to distribute the Internet connection to devices within the vehicle, allowing users to connect to the Internet whilst onboard the vehicle.

One solution proposed to overcome incomplete geographic coverage for vehicular data provision is for vehicles to carry, or have access to, a large number of subscriber identity modules (SIMs) or other means for accessing and authenticating on different mobile networks. In this way, different SIMs can be used in different areas, thereby ensuring connectivity. It is further possible to stop use of one SIM before exceeding a maximum data usage limit, and to begin using another of the SIMs. However, determining when data packet loss occurs, and when such loss is due to network operator implemented policies remains difficult.

It is an object of an embodiment of the present invention to obviate or mitigate one or more of the problems set out above.

According to a first aspect described herein, there is provided a method of analysing a stream of data packets received at a first device, each data packet within the stream of data packets having a respective sequence number, comprising: for each received data packet of said stream of data packets providing an indication of the receipt of the data packet at an associated position within a buffer each sequence number being associated with a respective position within the buffer; maintaining a head index at a position of the buffer associated with a received data packet having a highest sequence number; maintaining a tail index at a position of the buffer associated with a received data packet having a lowest sequence number; and determining for each position of the buffer through which the tail index passes whether an indication of receipt is stored at that buffer position and updating a packets lost count when a buffer position does not store an indication of receipt.

The method provides a particularly efficient method to detect packet loss in a stream of data packets, both in terms of memory usage and processor requirements.

The method may further comprise, for each received data packet: determining whether the sequence number of the received data packet is lower than a sequence number associated with the head indexed buffer position.

The method may further comprise, if it is determined that the sequence number of the received data packet is lower than the sequence number associated with the head indexed buffer position, determining whether a buffer position associated with the sequence number of the received data packet stores an indication that the data packet has been received and storing an indication at the buffer position if not. The method may further comprise updating a duplicates received count if the buffer position associated with the sequence number of the received data packet stores an indication that the data packet has been received. In this way, the method provides an efficient means of determining when duplicate data packets are received.

The method may further comprise, if it is determined that the sequence number of the received data packet is not lower than the sequence number associated with the head indexed buffer position, determining a target head index position based on the sequence number of the received data packet.

The target head index position P may be determined according to:

$$P = S \text{ modulus } N$$

wherein N is a number of positions of the buffer, and S is the sequence number of the received data packet.

The method may further comprise determining whether the tail index requires updating based on the target head index. If it is determined that the tail index requires updating, the method may comprise determining a target tail index based on the target head index. For example, the buffer may act like a circular buffer whereby the tail index is updated in response to updates to the head index.

The target tail index may be determined so as to be an integer multiple of eight positions from the tail index. In this way, a whole number of bytes of buffer positions is processed upon updating the tail index, thereby further increasing computational efficiency of the method.

The method may comprise, if it is determined that the tail index requires updating, updating the tail index to the target tail index.

A determination that the tail index requires updating may follow in the event that the target head index is within a predetermined minimum number of positions of the tail index. For example, a "guard interval" of a predetermined number of buffer positions may be maintained between the head and the tail index at all times.

The method may further comprise updating the head index to the target head index and storing an indication that a data packet was received at the buffer position of the updated head index. The method may further comprising storing indications that a data packet has not been received at each buffer position between the head index and the updated head index. In this way, indications that a data packet has not been received are efficiently stored in the buffer as the head index is updated upon receipt of new data packets.

When an indication that a data packet has been received is stored in the buffer, the method may further comprise updating a packets received count. In this way, it is easy to maintain a count of the number of data packets that have been received for comparison, for example, against a count of the number of data packets transmitted.

The method may further comprise, for each data packet: determining whether the sequence number of the received data packet is lower than a sequence number associated with the tail indexed buffer position; and if it is determined that the sequence number of the received data packet is lower than the sequence number associated with the tail indexed buffer position, updating an expired packets received count.

The stream of data packets may be received from a second device and the method may further comprise transmitting the packets lost count to the second device. The packets lost count may be transmitted with at least one other of a packets received count, a duplicates received count and an expired packets received count.

At least one of the first and second devices may be aboard a vehicle. Data packet loss may be particularly problematic from and to vehicular-based communication devices given, for example, rates of change of network connections being made/broken and changing geographical/meteorological conditions along a path of the vehicle. As such, the method may be particularly beneficial for vehicular-based applications.

The stream of data packets may be transmitted over a mobile network.

The second device may transmit data packets to the first device over any of a plurality of networks and the method may comprises selecting one or more of the plurality of networks to transmit data based on the packets lost count. The method may further comprise ceasing transmission of data to at least one of said plurality of networks based at least in part on said packets lost count. The second device may transmit data using any of a plurality of network identities and the method further comprises selecting one of said plurality of identities based at least in part on said packets lost count. The method therefore provides particularly efficient means by which a device can select from a plurality of networks over which to transmit data so as to improve service quality and avoid lost data packets.

According to a second aspect described herein, there is provided a computer program comprising computer readable instructions configured to cause a computer to carry out a method according to the first aspect.

More generally, it will be appreciated that aspects of the present invention can be implemented in any convenient way including by way of suitable hardware and/or software. For example, a device arranged to implement the invention may be created using appropriate hardware components. Alternatively, a programmable device may be programmed to implement embodiments of the invention. The invention therefore also provides suitable computer programs for implementing aspects of the invention. Such computer programs can be carried on suitable carrier media including tangible carrier media (e.g. hard disks, CD ROMs and so on) and intangible carrier media such as communications signals.

According to a third aspect described herein, there is provided an apparatus comprising: a memory storing a buffer having a plurality of positions; a receiver for receiving a stream of data packets, each data packet having a sequence number; and a processor arranged to, for each data packet in said stream, provide an indication of the receipt of the data packet at an associated position within the buffer each sequence number being associated with a respective position within the buffer; maintain a head index at a position of the buffer associated with a received data packet having a highest sequence number; maintain a tail index at a position of the circular buffer associated with a received data packet having a lowest sequence number; and determine for each position of the buffer through which the tail index passes whether an indication of receipt is stored at that buffer position and updating a packets lost count when a buffer position does not store an indication of receipt.

It will be appreciated that features presented in the context of one aspect of the invention in the preceding and following description can equally be applied to other aspects of the invention.

Embodiments of the present invention are now described, by way of example only, with reference to the accompanying drawings, in which:

Figure 1 is a schematic representation of a network of devices in accordance with one aspect described herein;
Figure 2 is a schematic representation of a buffer maintained by a device in the network of Figure 1;
Figure 3 is a flowchart showing an example of processing that may be carried out by one or more devices implementing an aspect described herein to process received data packets;
Figures 4A, 4B are schematic illustrations of a buffer at different times during the processing of Figure 3;
Figure 5 is a schematic illustration of a buffer at different times during an alternative example of the processing of Figure 3; and
Figure 6 is a schematic illustration of a network in accordance with another aspect described herein.

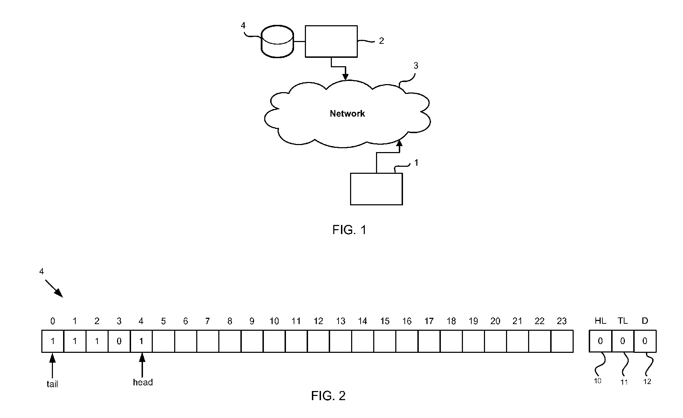

In Figure 1 a first device 1 is connected to a second device 2 via a network 3 so that the first device 1 and the second device 2 can exchange data between one another. The first and second devices 1, 2 may each take any form. In one embodiment, one or both of the first and second devices 1, 2 may comprise a mobile device such as a smartphone, a laptop, etc., while the other of the first and second devices 1, 2 may comprise a server. The network 3 may be any network and may be the Internet.

The first device 1 is arranged to transmit data packets to the second device 2. In particular, the first device 1 is arranged to transmit data packets using a communications protocol which does not provide monitoring of lost data packets (i.e. data packets which having been sent from the first device 1 but which do not reach the second device 2). For example, the first device 1 may be arranged to transmit User Datagram Protocol (UDP) data packets to the second device 2. In the following description, the data packets sent by the device 1 to the device 2 are referred to as UDP data packets, but it will be understood that embodiments of the invention are applicable to data packets sent in accordance with other protocols. It will further be appreciated that while the present invention is generally concerned with communications protocols in which the occurrence of dropped data packets is not monitored, the devices 1, 2 may of course exchange data packets in accordance with other communications protocols, such as, for example, TCP/IP.

Each UDP data packet sent from the first device 1 to the second device 2 comprises a sequence number, allowing that data packet to be uniquely identified. The sequence of numbers assigned to the UDP data packets may restart after a given time frame or after a maximum sequence number is used.

The second device 2 maintains a buffer 4. An example arrangement of the buffer 4 is schematically illustrated in Figure 2. The buffer 4 comprises a plurality of positions, each position having a position identifier. In the schematic illustration, the buffer 4 is a twenty-four position buffer having position IDs from 0 to 23. In the currently described example embodiment, each position of the buffer 4 is arranged to store a single bit of data, the single bit providing an indication as to whether a data packet having a sequence number corresponding to that buffer position has been received. It will be appreciated, however, that the buffer 4 may be of any size and that the indications may take any appropriate form. In general, and as described in more detail below, each time a UDP data packet is received at the second device 2 from the first device 1, the second device 2 determines the sequence number of the received UDP data packet and determines a position within the buffer 4 corresponding to that sequence number. An indication of the receipt of that data packet is recorded in the corresponding position of the buffer 4. In the example embodiment described herein, a '1' is stored in the corresponding buffer position.

The buffer 4 comprises a head index and a tail index. The head index is maintained so as to point to the buffer position storing data associated with a received data packet having a highest sequence number, while the tail index is maintained so as to point to the buffer position storing data associated with a received data packet having a lowest sequence number of all of the buffer positions currently in use.

For a buffer size of N, the corresponding position P for a sequence number S may be given by:

$$P = S \ modulus \ N \qquad (1)$$

The buffer 4 therefore acts as a circular buffer where, once the buffer 4 is full, the newest data replaces the oldest data. As such, where receipt of a data packet causes the head index to exceed position N (position 23 in the example of Figure 2), the head index 'wraps' around the buffer 4. Where the head index would meet or pass the tail index, the tail index is updated so as always index a buffer position corresponding to the data packet having a lowest sequence number.

A head loop counter 10 maintains a count of how many time the head index has looped around the buffer 4 and a tail loop counter 11 maintains a count of how many times the tail index has looped around the buffer 4. The loop counters 10, 11 may therefore be used to determine the sequence number of the data packets for which data is stored in any position of the buffer 4. In particular, the buffer position P indexed by the head index is associated with a data packet having the sequence number:

$$S = P + (N * HEAD\_LOOP) \qquad (2)$$

while the buffer position P indexed by the tail index, and each buffer position P between the tail index buffer position and the head index buffer position is associated with a data packet having the sequence number:

$$S = P + (N * TAIL\_LOOP) \qquad (3)$$

It will be appreciated, however, that maintaining index loop counters 10, 11 is merely one way of associating each buffer position with a particular sequence number, and that any other implementation by which each buffer position may be associated with a sequence number may be used. For example, in an alternative embodiment, a rolling packet counter may maintain the actual sequence number for which data is stored in the buffer (i.e. the sequence number of the data packet associated with the tail index buffer position). A sequence number associated with any other buffer position may then be calculated based on an offset from the tail index.

In the example of Figure 2, the device 2 has received a stream of data packets having sequence numbers [0, 1, 2, 4], causing a value of '1' to be entered into positions '0', '1', '2', '4' and a value of '0' to be entered into position '3'. Neither the head index nor the tail index has looped around the buffer 4 such that the counters 10, 11 each have a value of 0.

As described in detail below, as the tail index is updated, the buffer positions through which the tail index passes are examined to determine whether those buffer positions indicate that data packets have not been received. A data packet loss counter 12 is maintained to record the number of data packets that are not received. It will be appreciated that the loss counter 12 may be implemented in any appropriate way. By way of example only, the loss counter 12 may be a 32 bit unsigned integer. At a loss of 1000 data packets per second, a loss counter 12 implemented as a 32 bit unsigned integer would 'wrap' around to a value of '0' every forty-nine days.

In Figure 2 the buffer 4 is shown after receipt of four data packets, such that the head index and tail index are separated. It will be appreciated that before receipt of data packets, the buffer 4 (and the head and tail indices) may be initialised in any appropriate fashion. For example, both the head index and the tail index may initially point to the buffer position '0'.

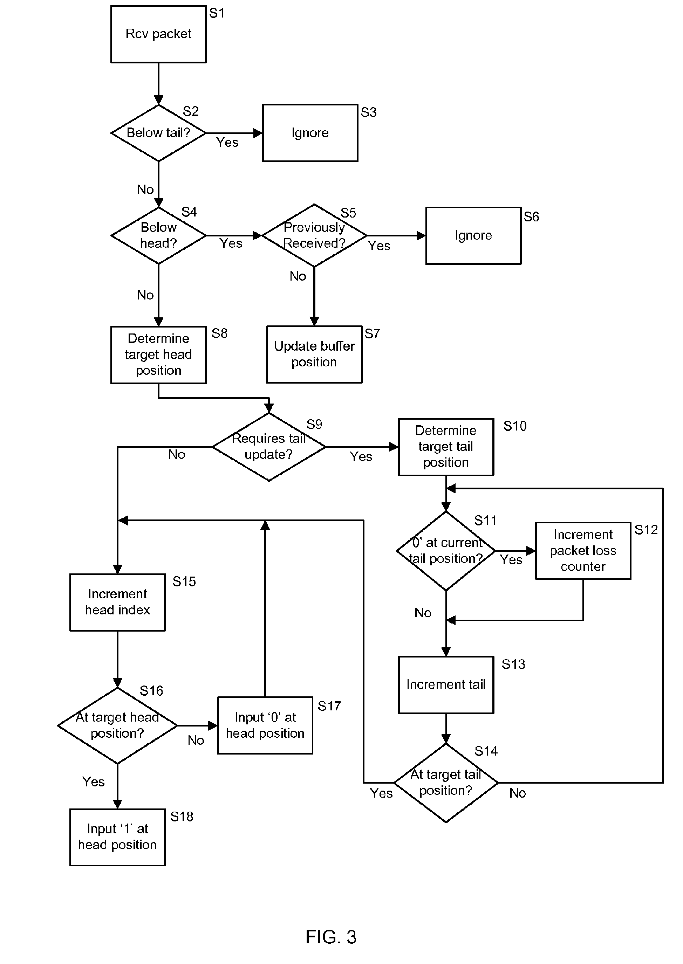

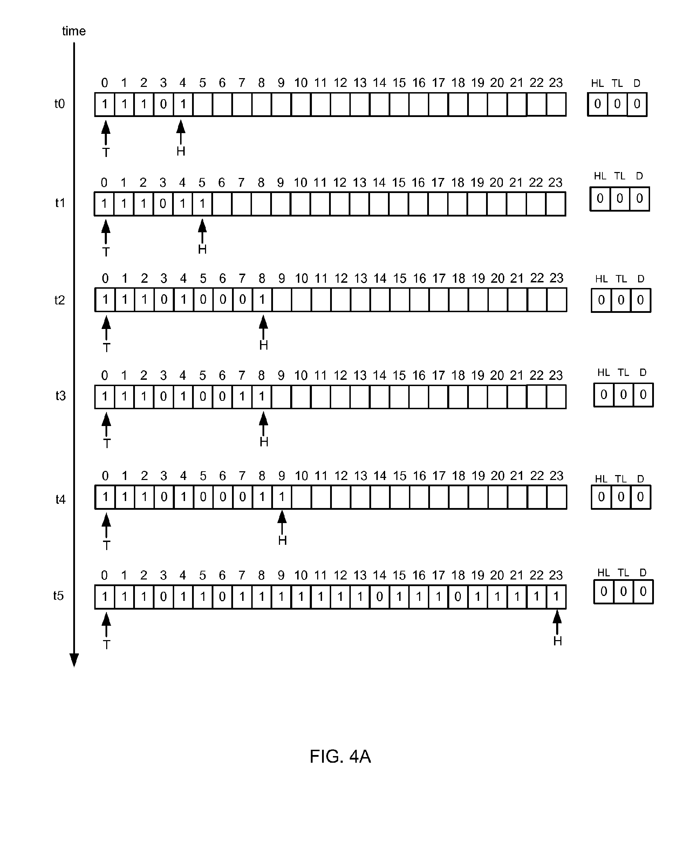

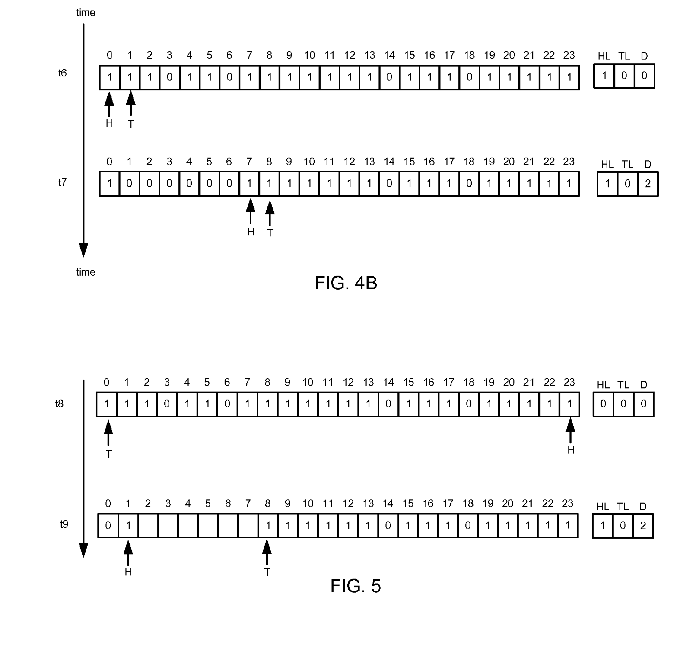

With reference to the flowchart of Figure 3 and the schematic representations of the buffer 4 in Figures 4A, 4B, an example of processing that may be carried out to process data packets received from the device 1 is now described. The processing of Figure 3 is first described in isolation, and an example of that processing is then described with reference to Figures 4A, 4B.

At step S1 a data packet having a sequence number is received at the device 2. Processing passes to step S2 where it is determined, using equation (3) whether the sequence number of the data packet is lower than the sequence number of the data packet associated with the tail index buffer position. If it is determined that the sequence number of the data packet is lower than the sequence number of the data packet associated with the tail index buffer position, processing passes to step S3, where processing of the received data packet ends and the data packet is ignored (with respect to updating of the buffer 4). That is, if the sequence number of the received data packet is lower than the sequence number of the data packet for which information is stored at the tail index buffer position, the received data packet is treated as having expired. It will be appreciated that in addition to being ignored for the purpose of updating the buffer 4, the data packet may also be discarded, or may be processed in any other way.

While in the presently described example embodiment, a received data packet is ignored at step S3, in other embodiments, an indication of receipt of an expired data packet may be recorded. For example, in an alternative embodiment, at step S3, an expired data packet counter may be updated in response to determining, at step S2, that the sequence number of the received data packet is lower than the sequence number of the data packet for which information is stored at the tail index buffer position.

If, on the other hand, it is determined at step S2 that the sequence number of the received data packet is not lower than the sequence number of the data packet associated with the tail index buffer position, processing passes from step S2 to step S4, where it is determined (using equation (2)) whether the data packet sequence number is below the sequence number of the data packet associated with the head index buffer position. If it is determined at step S4 that the data packet sequence number is below the sequence number of the data packet associated with the head index buffer position, processing passes to step S5, where it is determined whether a data packet having the data packet sequence number has already been received. That is, a buffer position associated with the data packet sequence number is determined using equation (1) and the determined buffer position is examined. If it is determined that a '1' is stored at the determined buffer position (i.e. the data packet has already been received), processing passes from step S5 to step S6, where processing of the data packet ends and the data packet is ignored (i.e. the buffer 4 is not updated).

While in the presently described example duplicated data packets are ignored at step S6, in other embodiments an indication of the receipt of duplicate data packets may be recorded. For example, in an alternative embodiment, at step S6 a duplicate data packet counter may be updated in response to determining, at step S5, that a data packet having the data packet sequence number has already been received.

If, on the other hand, it is determined at step S5 that a '0' is stored in the determined buffer position (i.e. the data packet has not already been received), processing passes from step S5 to step S7, at which the buffer 4 is updated to indicate receipt of that data packet (e.g. a value of '1' is stored at the determined buffer position) and processing of that data packet ends.

While not shown in the example embodiment of Figure 3, in other embodiments an indication of receipt of an out-of-order data packet may be recorded. For example, in some embodiments, at step S5 an out-of-order counter may be updated to indicate that the data packet received at step S1 was received out of sequence.

If it is determined at step S4 that the sequence number of the received data packet is higher than the sequence number of the data packet associated with the head index buffer position, processing passes from step S4 to step S8. At step S8 a target head index buffer position is determined based on the sequence number of the received data packet. Processing passes from step S8 to step S9, where it is determined whether the tail index requires updating to ensure that it remains (after any buffer positions are overwritten with new data) at the buffer position associated with the data packet having the lowest sequence number. In the present example, the processing at step S9 determines that the tail index requires updating when updating the head index to the target head index will cause the head index to "meet" (i.e. take the same value) or "pass" the tail index. If it is determined that the tail index requires updating, processing passes from step S9 to step S10.

At step S10 a target tail index is determined. In the present example, the target tail index is always one position above the target head index determined at step S8. As will be described in more detail below, in other embodiments a gap may be maintained between the head index and the tail index. As is now described, because the current tail index buffer position and the buffer positions between the current tail index buffer position and the target tail index buffer position will be overwritten, those buffer positions are processed to determine whether they show that data packets have been lost.

From step S10, processing passes to step S11 and it is determined whether a value of '0' is recorded at the current tail index buffer position. If it is determined that a '0' is recorded at the current tail index buffer position, this indicates that a data packet having a sequence number associated with that buffer position was not received and processing passes from step S11 to step S12. At step S12 the data packet loss counter 12 is incremented. Processing passes from step S12 to step S13.

On the other hand, if it is determined at step S11 that a '0' is not recorded at the current tail index buffer position (i.e. a '1' is recorded), this indicates that a data packet having a sequence number associated with that buffer position was received, and processing passes directly from step S11 to step S13. While not described in this example embodiment, a "packets received" counter may be updated to indicate successful receipt of the data packet associated with the current tail index buffer position.

At step S13, the tail index is incremented by one. At step S14 it is determined whether the current tail index matches the target tail index determined at step S10. If it is determined that the current tail index does not match the target tail index, processing passes back to step S11. Conversely, if it is determined at step S14 that the current tail index does match the target tail index determined at step S10, processing passes from step S14 to step S15.

If it is determined at step S9 that the tail index does not require updating, processing passes directly from step S9 to step S15. At step S15 the head index is incremented by one. At step S16 it is determined whether the current head index matches the target head index determined at step S8. If the current head index does not match the target head index, processing passes to step S17 and a '0' is recorded in the current head index buffer position to indicate that the data packet associated with that buffer position has not yet been received. Processing passes from step S17 to step S15.

If, on the other hand, it is determined at step S16 that the current head index does match the target head index, processing passes from step S16 to step S18 at which a value of '1' is recorded in the current head index buffer position to indicate that the data packet associated with that buffer position has been received.

The processing of Figure 3 therefore processes received data packets to populate the buffer 4 by associating each data packet with a particular buffer position based upon the respective sequence numbers within the received data packets. Indications are added to the relevant buffer positions so that it can be easily determined whether the data packet associated with that buffer position has been received. The stored indications are not processed until the buffer 4 is filled, after which the indications are processed as the buffer positions associated with the oldest sequence numbers are overwritten (i.e. as the tail index is updated).

An example of the processing of Figure 3 is now described with reference to Figures 4A, 4B showing how the buffer 4 fills (Figure 4A) and processing after the buffer 4 has filled (Figure 4B). In Figure 4A, filling of the buffer 4 from the state shown in Figure 2 is depicted, with time increasing down the page. At time t0, the buffer is as described above with reference to Figure 2 (i.e. having received a stream of data packets having sequence numbers [0, 1, 2, 4]). The tail index points to the buffer position '0' while the head index points to the buffer position '4'. The buffer 4 is updated by the device 2 in response to receiving a stream of data packets from the device 1 having sequence numbers [5, 8, 7, 9, 7, 10, 11, 12, 13, 15, 16, 17, 19, 20, 21, 22, 23].

At step S1, a data packet having a sequence number [5] is received. Processing passes to step S2 at which it is determined that the data packet sequence number [5] is not lower than the sequence number of the data packet associated with the current tail index buffer position. Processing therefore passes from step S2 to step S4 at which it is determined that the data packet sequence number [5] is not lower than the sequence number of the data packet associated with the current head index buffer position. As such, processing passes from step S4 to step S8 at which a target head index of '5' is calculated.

Processing passes from step S8 to step S9 at which it is determined that the target head index does not meet or pass the tail index such that the tail index does not require updating. Processing therefore passes from step S9 to step S15 and the head index is incremented by one. At step S16 it is determined that the current head index matches the target head index. Processing therefore passes to step S18 and a '1' is recorded at the buffer position '5'. The buffer 4 is therefore in the state shown at time t1 of Figure 4A.

Next a data packet with sequence number [8] is received and processing proceeds as for the data packet with sequence number [5] (with a target head index of '8' being determined at step S8) until step S15. At step S15 the current head index is incremented from '5' to '6'. At step S21 it is determined that the current head index does not match the target head index. Processing therefore passes to step S17 and a '0' is recorded at buffer position '6'. Processing passes back to step S15 and the head index is incremented again. At step S16 it is again determined that the head index does not match the target head index and, at step S17, a '0' is recorded at buffer position '7'. Incrementing the head index a third time at step S15 causes the current head index to match the target head index such that processing passes from step S16 to step S18, and a '1' is recorded at buffer position '8' so that the buffer 4 is as shown at time t2 of Figure 4A.

The data packet with sequence number [7] is received. At step S2 it is determined that the sequence number [7] is not below the sequence number of the data packet associated with the current tail index and processing passes to step S4. It is determined that the sequence number [7] is below the sequence number of the data packet associated with the current head index buffer position (sequence number [8]) and processing passes from step S4 to step S5. At step S5 it is determined that a '0' is recorded in the buffer position '7' indicating that the data packet with sequence number [7] has not previously been received. Processing passes from step S5 to step S7 and a '1' is recorded at the buffer position '7', so that the buffer 4 is as shown at time t3 of Figure 4A.

Receipt of the data packet having sequence number [9] results in processing as described for the data packet having sequence number [5], leaving the buffer 4 as shown at time t4 of Figure 4A. The next data packet to be received has the sequence number [7] such that it is determined, at step S4, that the data packet sequence number is below the sequence number of the data packet associated with the current head index buffer position and processing passes to step S5. At step S5 it is determined that the buffer position '7' contains a '1' indicating that the data packet with sequence number [7] has already been received. Processing therefore passes from step S5 to step S6 and the data packet is ignored (i.e. the buffer is not updated in response to receiving the duplicate data packet) leaving the buffer 4 as shown at time t4 of Figure 4A.

Processing of data packets [10, 11, 12, 13, 15, 16, 17, 19, 20, 21, 22, 23] proceeds as described above such that the buffer 4 is filled, as shown at time t5 in Figure 4A. The head index points to the buffer position '23' while the tail index remains at the buffer position '0'.

Referring now to Figure 4B, updates to the buffer 4 in response to receipt of data packets [24, 31, 7] are described. Upon receipt of the data packet having sequence number [24], it is determined at step S2 that the sequence number [2] is not lower than the sequence number of the data packet associated with the current tail index buffer position. At step S5 it is determined that the sequence number [24] is not lower than the sequence number of the data packet associated with the current head index buffer position (sequence number [23]). At step S8 a target head index position of '0' is determined using equation (1). At step S9, it is determined that a tail index update is required (because the target head index is the same as the current tail index) and processing passes to step S10.

At step S10 a target tail index of '1' is calculated (one position above the target head index). At step S11 it is determined that a value of '1' at the current tail index buffer position. Processing therefore passes to step S13 and the tail index is incremented by one so as to point to the buffer position '1'. At step S14 it is determined that the current tail index matches the target tail index and processing passes to step S15.

At step S15, the head index is incremented by one so as to point to buffer position '0'. At step S16 it is determined that the current head index is at the target head index and a '1' is recorded at the current head index buffer position at step S18. The head index loop counter is incremented to show that the head index has made one full loop of the buffer 4. A determination as to whether the head index (or the tail index) has made a complete loop of the buffer 4 may be made in any way. For example, it may be determined whether a previous value of the head index was higher (or lower) than the tail index and whether this has changed following the update. The buffer 4 is as shown at time t6 in Figure 4B.

Next, a data packet with sequence number [31] is received. At step S2, it is determined that the current tail index buffer position is associated with a data packet having a lower sequence number of [1], such that processing passes to step S4. It is determined that the head index buffer position is associated the data packet having sequence number [24], which is lower than the sequence [31] such that processing passes to step S8. A target head index position of '7' is determined (31 mod 24) and processing passes to step S9. It is determined that updating the head index to the target head index of '7' will cause the head index to pass the tail index, such that the tail index requires updating. Processing therefore passes to step S10.

At step S10, a target tail index of '8' is determined. Processing loops between steps S11, S13 and S14 processing the buffer positions '1' and '2'. When the tail index is incremented to point to the buffer position '3' it is determined at step S11 that a '0' is recorded in the tail index buffer position such that processing passes to step S12 and the packet loss counter 12 is incremented. The packet loss counter 12 is incremented again as the tail index passes buffer position '6', with processing passing to step S15 after the tail index is incremented to point to the target tail index (buffer position '8').

Processing then loops through steps S15, S16, S17 as the head index is incremented through, and '0's are stored at, buffer positions '1' to '6'. When the head index is incremented to point to the target head index position '7', processing passes to step S18 and a '1' is recorded in the buffer position '7' to indicate that the data packet with sequence number [31] has been received. The buffer 4 is as shown at time t7 in Figure 4B. Next, a third data packet with sequence number [7] is received. At step S2 it is determined that the sequence number [7] is below the sequence number of the data packet associated with the tail index buffer position, such that processing passes to step S3 and the data packet is ignored. The buffer 4 therefore remains in the state shown at time 8 of Figure 4B.

It can be seen from the above therefore, that upon filling of the buffer 4, the dropped packet counter 12 is updated to count each data packet that is not received before the buffer position corresponding to that data packet is overwritten. The second device 2 can therefore determine how many data packets, within a sequence of data packets transmitted from the first device 1, have not been received.

By storing receipt indications in positions of a buffer 4 associated with data packet sequence numbers, storage requirements for the buffer are minimal as whole data packets need not be stored. Further, because at any one time each position of the buffer 4 is associated with a particular sequence number, no expensive ordering operations are needed to determine which of a set of received sequence numbers is missing.

Additionally, it will be appreciated that the buffer sizes described above are merely exemplary and that any suitable buffer size may be used. Because the buffer 4 must fill before the indications stored therein are processed, the use of the buffer 4 enforces a delay on how soon a data packet can be determined as having not been received. Buffer sizes may therefore be selected based upon parameters such as a number and rate of data packets expected to be received, and likely delays across the network over which the data packets are being sent. For example, where it is known that a particular network may delay data packets by up to, say, one minute, for a transmission rate of 100 data packets per second, a 6000 position buffer may be provided to allow sufficient time, in general, for delayed data packets to be received before those data packets are determined to have been dropped.

It will be appreciated that the particular processing described above with reference to Figure 3 is merely one exemplary method of selecting buffer positions based on a sequence number of a received data packet. The order of steps within Figure 3 and the particular processing described as being performed at each step may be modified. In alternative embodiments to the example described above, the processing of Figure 3 may be altered to more efficiently count the number of dropped data packets.

In one embodiment, counting may be done in whole numbers of bytes. For example, at step S10 of Figure 3, a target tail index may be determined such that the tail index is always incremented through an integer multiple of eight positions. For example, processing at step S10 may determine a number of positions through which to increment the tail index so as to be one position higher than the target head index, and to select the first multiple of eight above that number of positions. For example, with reference to Figure 5, at a time t8, the buffer 4 is shown in a state at which the head index points to position number '23' while the tail index points to position number '0' and before either the head or tail index has looped (as at time t5 in Figure 4A). When a data packet is received having a sequence number of [25], the processing of Figure 3 will result in a target head index of '1' and a determination, at step S9 that the tail index requires updating.

Where the processing of step S10 is arranged such that the tail index is incremented by an integer multiple of eight positions, a target tail index of '8' may be determined at step S10. In this case, the processing of Figure 3 would result in a buffer as shown at time t9 of Figure 5, in which the '0' values stored at positions '3' and '6' have been processed to increment the data packet loss counter 12 by two, and the head index loop counter 10 from '0' to '1'. Positions '2' to '7' are shown empty (i.e. having neither a '0' nor a '1' stored therein), as these buffer positions are not currently in use. The buffer positions '2' to '7' will fill again as new data packets are received.

The positions '2' to '7' may be considered to provide a "guard interval". By providing a guard interval, a number of incoming data packets (six in the example of Figure 5) may be added to the buffer 4 without forcing updates to the tail index and thereby reducing, on average, processing time spent processing expired positions of the buffer. It will be appreciated that in other embodiments, the tail index may be updated so as to include a larger guard interval between the head index and the tail index. Indeed, the tail index may be updated so as to be any predetermined number of positions from the head index. By providing a larger guard interval, packets having a larger sequence number may be received without requiring updates to the tail, thereby decreasing, on average, the frequency with which updates to the tail are required. However, it will be appreciated that a longer guard interval will delay the processing of expired buffer positions, such that update to the lost packet counter become less continuous and occur in quantised bursts.

In order to increase the average length of the guard interval, a minimum guard interval may be maintained. For example, updates to the tail index may be forced when updates to the head index would result in the head index being within a predetermined number of positions from the head index. For example, updates to the tail index may be forced when the head index is updated to within eight positions of the tail index.

The packets lost counter (and any other maintained counters) may be sampled and its values recorded to a database at a predetermined sampling rate. As the packets lost statistics are being produced at a non-periodic rate, the time between the statistics being produced (e.g. the tail being updated) and the statistics being sampled and stored is variable an dependent upon the rate of data production and consumption. Where the counts are sampled for storage in a database, it may therefore be preferable if the sample rate is selected so as to minimize timing errors. As the packets lost count is an accumulative count, it may be preferable that the sample rate is selected so as to be lower than the (average) rate at which the packets lost count is updated.

By performing the packet loss counting operations in multiples of whole bytes, the packet loss counting operation is advantageously more bursty, helping to prevent the packet loss counting operation from monopolising processor time that may be required for other operations.

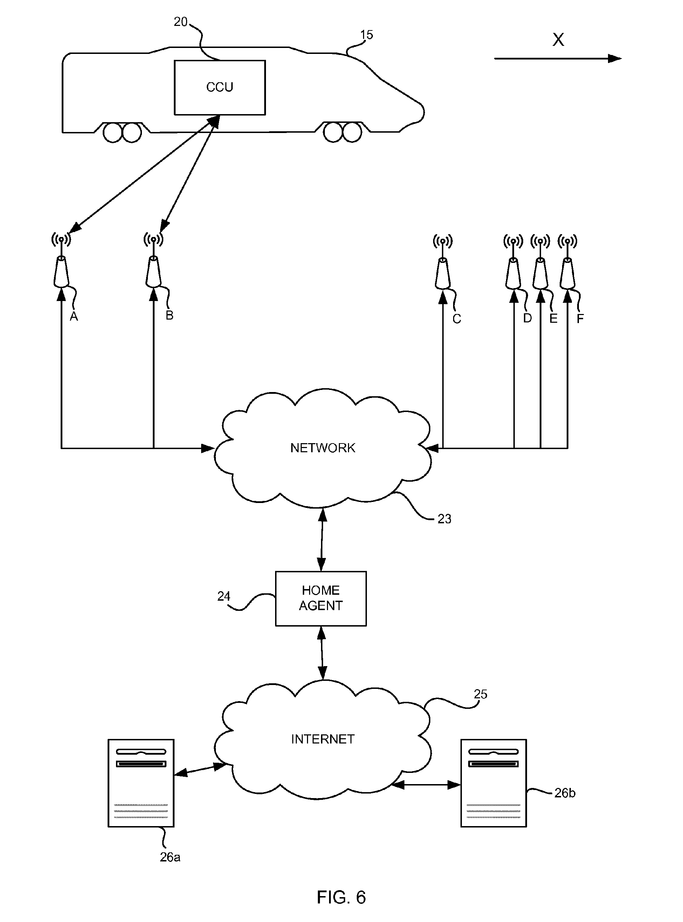

With reference to Figure 6, there is now described a particular example embodiment in which techniques described above are used to process UDP data packets sent between a vehicle and a home agent. In particular, Figure 6 shows a network which is used to provide data communication to devices aboard a train 15. The train 15 is provided with a communications control unit (CCU) 20 which is arranged to connect to base stations A to F, each of which are connected to a network 23. Both the CCU 20 and the base stations A to F are provided with wireless communications interfaces to allow a wireless connection to be established between the CCU 20 and the base stations A to F. A home agent 24 is also connected to the network 23. Communication tunnels are established between the CCU 20 and the home agent 24 using data packet encapsulation, so as to allow data packets to be securely exchanged between the CCU 20 and the home agent 24. It will be appreciated that while in the example embodiment of Figure 6, only a single home agent 24 is provided, in other embodiments multiple home agents may be provided. The CCU 20 may connect to one home agent in some circumstances (such as geographical proximity), and another home agent in other circumstances, or may connect to multiple home agents at the same time.

It will be appreciated that while Figure 6 shows each of the base stations A to F directly connected to a single network 23, each base station A to F may be connected to one or more further networks which are in turn connected to the network 23. For example, the base station A may be connected to a GSM cellular network, while the base station B may be connected to an IEEE 802.16 (WiMax) network, each of which may be connected to the network 23. Further, while the Internet 25 and the network 23 are shown separately in Figure 6, the network 23 may be connected to, and may at least partly include, the Internet 25.

The home agent 24 is connected to the Internet 25. Host computers 26a, 26b are also connected to the Internet 25. The connection of the CCU 20 to the home agent 24 through a communication tunnel means that from the point of view of computers connected to the Internet 25 (for example the host computers 26a, 26b), all traffic is seen to emanate from the home agent 24, such that computers connected to the Internet 25 need not be concerned with details of the communication between the home agents 24a, 24b and CCU 20. Instead, computers connected to the Internet 25 can simply deliver data packets to the home agent 24 which can then process received data packets to ensure that such data packets are properly forwarded to the CCU 20.

The CCU 20 is arranged to provide wireless network connectivity on board the train 15. In this way passengers travelling on the train 15 can use mobile computing devices (such as laptop and palmtop computers, for example) to connect to the CCU 20 and thereby obtain access to the Internet 25. The connection between the mobile computing devices and the CCU 20 can take any suitable form, but may, for example, be in accordance with IEEE standard 802.11 (WiFi).

As the train 15 moves in the direction shown by the arrow X, the CCU 20 connects to different ones of the base stations A to F. Each base station A to F has a finite area within which it can receive and transmit data, and it is preferred that the finite areas overlap, such that there is a time during travel of the train during which the train is able to communicate with more than one of the base stations A to F. In Figure 6, the train 15, and therefore the CCU 20 is within the signal range of both of the base stations A, B and is connected to both of the base stations A, B.

As described above, one or more of the base stations A to F may connect to mobile networks using GSM (Global System for Mobile Communications) based technologies such as UTMS and HSDPA networks. As is well known in the art, GSM based networks require users to authenticate themselves on the network using a Subscriber Identity Module (SIM). The CCU 20 therefore comprises suitable components to allow connection to, and authentication on, GSM networks. The CCU 20 may comprise suitable components to allow connection to, and authentication on, multiple different GSM networks, and/or to authenticate differently on a single GSM network. For example, the CCU 20 may be able to make use of a plurality of SIMs.

It is to be understood that the train 15 may be one train in a fleet of similar trains, each train in the fleet carrying a respective CCU, arranged similarly to that shown in Figure 6. That is, each train in a fleet may be arranged to provide connectivity to passengers aboard the train by connection to the home agent 24 via a CCU aboard that train.

The processing of Figure 3 may be carried out by the CCU 20 to determine when data packets from the home agent 24 are dropped on the network 23, while the home agent 24 may carry out the processing of Figure 3 to determine when data packets from the CCU 20 are dropped on the network 23. Either or both the CCU 20 and the home agent 24 may be arranged to transmit data packet loss information it has recorded to the other. Such transmission may be according to any appropriate scheme. By way of example only, such transmission may be periodic or may be upon reaching a predetermined threshold number of lost data packets. The data may be sent, or correlated, with time and/or geographical/location information to determine the times and locations at which data packets are most commonly lost across particular networks.

Additionally, the CCU 20 and home agent 24 may record the number of packets it sends in a given time period. The number of packets may then be sent, along with the statistics regarding packet loss (and any other packet statistics as described above, such as receipt, duplication, out-of-order receipt, etc.). In this way, it is possible to account for data packets at each stage from leaving a source, being in transit on the network 23, being processed by the buffer 4 and finally being counted as processed or dropped.

It has been found that network operators may apply fair usage policies to UDP data packet streams. Such fair use policies may be applied by randomly dropping data packets. Data packets may be dropped periodically, or aperiodically, and generally occurs without notification to either endpoint. As such, determining when, and how many, UDP data packets have been dropped by a particular network operator may be difficult. Using the techniques described herein, data can be obtained relating to particular network operators in order to develop indications as to when and how network operators drop data packets. Data recorded by the CCU 20 and/or the home agent 24 may therefore be used to reduce a number of dropped data packets.

For example, if it is determined that use of a particular network, or a particular identity (e.g. SIM) on that network, results in dropped data packets between certain times or at particular locations, a different network, or a different identity, may be selected for use at those times. One example of how the CCU 20 may select from a plurality different SIMs is described in the Applicant's co-pending patent application GB 2511301. In one embodiment, the CCU 20 may be arranged to select a different SIM (e.g. to select a different network or to select a different identity on the same network) if a number of dropped data packets exceeds a predetermined threshold.

In some embodiments, packet loss statistics can be used to decide whether to disable data traffic from being sent by a particular modem (e.g. by switching off that particular modem) for a given duration of time if it is known that the network to which that modem is connected is not reliably passing data traffic. For example, where the CCU 20 has several modems connecting to several networks, it may be desirable to choose to not use a particular network if a high data packet loss is discovered, or if packet dropping is detected, rather than to continue to attempt to use that network. By disabling data traffic from being sent by the modem that is experiencing high data packet loss, the users aboard the vehicle 15 will observe a higher level of perceived service than if the modem experiencing high data packet loss continues to be used. It will be appreciated that the determination as to whether to disable a particular modem may be made in any appropriate way. For example, a particular modem may be disabled in response to data packet loss exceeding a threshold.

Where an indication of received duplicate data packets is maintained (e.g. a duplicate data packet counter is maintained), this may be used to determine whether it is the network or the sending device that is duplicating the data packets. Potential reasons for data packet duplication may include, for example: a router on the network which is duplicating data packets and possibly sending the data packets via two different routes; an intermediate link on the mobile network that is dropping data packets in one direction causing frequent re-sends of the same data packet between intermediate nodes using an added retransmission mechanism; and a base station handover that has resulted in the sending device (e.g. the CCU 20 or the home agent 24) to resend the same set or sequence of data packets.

It will be appreciated from the above that analysis of the data packet statistics recorded using the techniques described above, may be used, for example, to determine: the median, minimum, maximum, mean and standard deviation of the number of data packets in transit across the network, the data packet flow rates across the network, the number of data packets dropped, and data packet duplication rates.

The data packet statistics determined as described above may be provided to locally executed, or web based applications, with a graphical user interface (GUI) to show network status. A user may therefore be able to trace and detect network faults identified by network operator, network identity (e.g. SIM identity) and geographic location. Occurrences of "fair usage" being applied (by location and/or time) by a network operator for a particular network identity may be identified. Where identified, evidence of "fair usage" policies being applied may be used to compare received service levels with service levels that have been agreed with the network operator. As such, future network usage may be determined based upon identified discrepancies between agreed and provided service levels.

From the above description, it will be appreciated that while the buffer 4 described above operates similarly to a circular buffer, the use of such a buffer is not essential. For example, the buffer 4 may be implemented using one or more fixed-length arrays, each array having a fixed "starting" position (e.g. position [0]). Each array may be filled (e.g. sequentially in the case of multiple arrays), with the values stored in each array being processed once that array is full. In some embodiments, only a portion of a full array may be processed so that if an out of sequence data packet is received after processing, a chance that the data packet can be counted is increased. It will be appreciated that in this case, the head index still indicates a position in the array(s) associated with the highest received data packet sequence number while the tail index indicates a position in the array(s) associated with a lowest received data packet sequence number.

In a second example alternative embodiment, the buffer 4 may be implemented as a linked list, each element representing a received packet sequence number and linking to a preceding and/or subsequent received packet sequence number. Out-of-order data packets can be inserted into the linked list by traversing the links to find the correct position. Periodically, the linked list may be "pruned", from the tail index, to update the packets lost counter. In a third example alternative embodiment, the buffer 4 may be implemented as a binary tree, with nodes inserted into the tree as data packets are received. The tree may be pruned periodically from the root (i.e. the tail index) to update the packets lost counter. In a final alternative example embodiment, packet sequence numbers of received packets may be stored in a database.

Each of the alternative example embodiments above suffers from disadvantages compared to using a buffer 4 that operates like a circular buffer. For example, using arrays removes the continuous update of the packets lost counter as data packets are received, while using a linked list, an ordered tree and a database, imposes significantly larger overheads on adding indications to the buffer 4.

It will further be appreciated that the techniques described above may be usefully employed by any device that is arranged to receive data packets which are "lossy" and for which delivery is not "guaranteed" (that is for which the protocol by which the data packets are transmitted does not attempt to re-send dropped data packets).

By way of further examples, the techniques described herein may be used to detect packet loss resulting from any of a plurality of phenomena. For example for fixed terrestrial links, signal obstructions may be caused by, amongst other phenomena: clouds, atmospheric water vapour or dust in the signal path (dependent on frequency and propagation effects); changes in propagation due to Rayleigh scattering and/or Ionospheric effects (changes in reflected signal path); large objects (such as vehicles, ships, etc.) moving into the signal path; changes in multipath due to subtle atmospheric changes such as atmospheric pressure changes or change in weather; mechanical movement of antenna resulting in misalignment; ground based interference or deliberate signal jamming; long distance interference from lightning. For mobile terrestrial links, signal obstructions may be caused by, amongst other phenomena, tunnels; large buildings blocking the signal path; lack of network coverage; antenna directivity or polarisation resulting in the receive and/or transmit antenna not aligning; ground based interference or deliberate signal jamming; and long distance interference from lightning. For satellite links, signal obstruction may be caused by, amongst others, mechanical movement of the antenna resulting in misalignment; changes in satellite orbit or position; atmospheric water vapour; changes in thickness of ionosphere; antenna misalignment; antenna pointing towards the sun at given times of the day on certain days of the year (or everyday on the equator) due to the relative high power level of the emitted "thermal noise" of the sun; and ground based Interference or deliberate signal jamming. For interplanetary links, obstructions may, for example, be caused by intersection of the signal by the relative position of planets, their moons and/or dust clouds due to orbital effects; and loss of signal due to thermal noise when the craft is in line with the sun as observed from the earth station.

It will be appreciated that many of the above phenomena results in different qualities in terms of a data packet loss rate, such as whether the data packets are dropped in blocks or at random intervals. Through analysing the counts made using the techniques described above, reasons for packet loss may be distinguished.

Embodiments of the present invention have been described above and it will be appreciated that the embodiments described are in no way limiting. Indeed, many variations to the described embodiments will be apparent to an ordinary skilled person, such variations being within the spirit and the scope of the present invention.

**Claims**

1. A method of analysing a stream of data packets received at a first device, each data packet within the stream of data packets having a respective sequence number, comprising:

   for each received data packet of said stream of data packets providing an indication of the receipt of the data packet at an associated position within a buffer each sequence number being associated with a respective position within the buffer;
   maintaining a head index at a position of the buffer associated with a received data packet having a highest sequence number;
   maintaining a tail index at a position of the buffer associated with a received data packet having a lowest sequence number; and
   determining for each position of the buffer through which the tail index passes whether an indication of receipt is stored at that buffer position and updating a packets lost count when a buffer position does not store an indication of receipt.

2. The method of claim 1, further comprising, for each received data packet:

   determining whether the sequence number of the received data packet is lower than a sequence number associated with the head indexed buffer position.

3. The method of claim 2, wherein the method further comprises:

   if it is determined that the sequence number of the received data packet is lower than the sequence number associated with the head indexed buffer position, determining whether a buffer position associated with the sequence number of the received data packet stores an indication that the data packet has been received and storing an indication at the buffer position if not.

4. The method of claim 3, further comprising updating a duplicates received count if the buffer position associated with the sequence number of the received data packet stores an indication that the data packet has been received.

5. The method of any one of claims 2 to 4, wherein the method further comprises:

   if it is determined that the sequence number of the received data packet is not lower than the sequence number associated with the head indexed buffer position, determining a target head index position based on the sequence number of the received data packet; and optionally
   wherein the target head index position P is determined according to:

   $$P = S \text{ modulus } N$$

   wherein N is a number of positions of the buffer, and S is the sequence number of the received data packet.

6. The method of claim 5, wherein the method further comprises determining whether the tail index requires updating based on the target head index.

7. The method of claim 6:

   wherein if it is determined that the tail index requires updating, determining a target tail index based on the target head index; and optionally wherein the target tail index is determined to be an integer multiple of eight positions from the tail index; and/or wherein if it is determined that the tail index requires updating, updating the tail index to the target tail index;

and/or

wherein it is determined that the tail index requires updating if the target head index is within a predetermined minimum number of positions of the tail index.

8. The method of any of claims 5 to 7, further comprising updating the head index to the target head index and storing an indication that a data packet was received at the buffer position of the updated head index; and optionally:

further comprising storing indications that a data packet has not been received at each buffer position between the head index and the updated head index;

and/or

further comprising updating a packets received count.

9. The method of any preceding claim, further comprising for each data packet:

determining whether the sequence number of the received data packet is lower than a sequence number associated with the tail indexed buffer position; and

if it is determined that the sequence number of the received data packet is lower than the sequence number associated with the tail indexed buffer position, updating an expired packets received count.

10. The method of any preceding claim wherein the stream of data packets is received from a second device and the method further comprises transmitting the packets lost count to the second device; and optionally:

the packets lost count is transmitted with at least one other of a packets received count, a duplicates received count and an expired packets received count;

and/or

wherein at least one of the first and second devices is aboard a vehicle.

11. The method of any preceding claim, wherein the stream of data packets is transmitted over a mobile network.

12. The method of claim 10 or 11, wherein the second device may transmit data packets to the first device over any of a plurality of networks and wherein the method comprises selecting one or more of said plurality of networks to transmit data based on said packets lost count; and optionally

wherein the method further comprises ceasing transmission of data to at least one of said plurality of networks based at least in part on said packets lost count.

13. The method of any of claims 10 to 12, wherein the second device may transmit data using any of a plurality of network identities and the method further comprises selecting one of said plurality of identities based at least in part on said packets lost count.

14. A computer program comprising computer readable instructions configured to cause a computer to carry out a method according to any one of claims 1 to 13.

15. An apparatus comprising:

a memory storing a buffer having a plurality of positions;

a receiver for receiving a stream of data packets, each data packet having a sequence number; and

a processor arranged to, for each data packet in said stream, provide an indication of the receipt of the data packet at an associated position within the buffer each sequence number being associated with a respective position within the buffer;

maintain a head index at a position of the buffer associated with a received data packet having a highest sequence number;

maintain a tail index at a position of the circular buffer associated with a received data packet having a lowest sequence number; and

determine for each position of the buffer through which the tail index passes whether an indication of receipt is stored at that buffer position and updating a packets lost count when a buffer position does not store an indication of receipt.

FIG. 1

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | | HL | TL | D |
|---|---|---|---|---|---|---|---|---|---|----|----|----|----|----|----|----|----|----|----|----|----|----|----|---|----|----|---|
| 1 | 1 | 1 | 0 | 1 | | | | | | | | | | | | | | | | | | | | | 0 | 0 | 0 |

tail    head

FIG. 2

FIG. 3

time

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | | HL | TL | D |

t0: 1 1 1 0 1 — T at 0, H at 4 — HL TL D: 0 0 0

t1: 1 1 1 0 1 1 — T at 0, H at 5 — 0 0 0

t2: 1 1 1 0 1 0 0 0 1 — T at 0, H at 8 — 0 0 0

t3: 1 1 1 0 1 0 0 1 1 — T at 0, H at 8 — 0 0 0

t4: 1 1 1 0 1 0 0 0 1 1 — T at 0, H at 9 — 0 0 0

t5: 1 1 1 0 1 1 0 1 1 1 1 1 1 1 0 1 1 1 0 1 1 1 1 1 — T at 0, H at 23 — 0 0 0

FIG. 4A

16

time

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | | HL | TL | D |
|----|---|---|---|---|---|---|---|---|---|---|----|----|----|----|----|----|----|----|----|----|----|----|----|----|---|----|----|---|
| t6 | 1 | 1 | 1 | 0 | 1 | 1 | 0 | 1 | 1 | 1 | 1 | 1 | 1 | 1 | 0 | 1 | 1 | 1 | 0 | 1 | 1 | 1 | 1 | 1 | | 1 | 0 | 0 |

H   T

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | | HL | TL | D |
|----|---|---|---|---|---|---|---|---|---|---|----|----|----|----|----|----|----|----|----|----|----|----|----|----|---|----|----|---|
| t7 | 1 | 0 | 0 | 0 | 0 | 0 | 0 | 1 | 1 | 1 | 1 | 1 | 1 | 1 | 0 | 1 | 1 | 1 | 0 | 1 | 1 | 1 | 1 | 1 | | 1 | 0 | 2 |

H   T

time

**FIG. 4B**

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | | HL | TL | D |
|----|---|---|---|---|---|---|---|---|---|---|----|----|----|----|----|----|----|----|----|----|----|----|----|----|---|----|----|---|
| t8 | 1 | 1 | 1 | 0 | 1 | 1 | 0 | 1 | 1 | 1 | 1 | 1 | 1 | 1 | 0 | 1 | 1 | 1 | 0 | 1 | 1 | 1 | 1 | 1 | | 0 | 0 | 0 |

T                                                                                                H

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | | HL | TL | D |
|----|---|---|---|---|---|---|---|---|---|---|----|----|----|----|----|----|----|----|----|----|----|----|----|----|---|----|----|---|
| t9 | 0 | 1 | | | | | | | 1 | 1 | 1 | 1 | 1 | 1 | 0 | 1 | 1 | 0 | 1 | 1 | 1 | 1 | 1 | | | 1 | 0 | 2 |

H               T

**FIG. 5**

FIG. 6

Europäisches
Patentamt

European
Patent Office

Office européen
des brevets

# EUROPEAN SEARCH REPORT

Application Number

EP 15 16 5538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/132603 A1 (COHEN ETAN GUR [US] ET AL) 23 May 2013 (2013-05-23) <br> * figure 11 * <br> * paragraph [0144] - paragraph [0148] * <br> * claims 1-6 * <br> ----- | 1-15 | INV. <br> H04L12/801 <br><br> ADD. <br> H04L12/825 <br> H04L12/835 |

TECHNICAL FIELDS
SEARCHED    (IPC)

H04L

The present search report has been drawn up for all claims

| Place of search | Date of completion of the search | Examiner |
|---|---|---|
| The Hague | 17 March 2016 | Tsuchiya, Kuni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 018 872 A1**

## ANNEX TO THE EUROPEAN SEARCH REPORT
## ON EUROPEAN PATENT APPLICATION NO.

EP 15 16 5538

17-03-2016

| Patent document cited in search report | Publication date | Patent family member(s) | Publication date |
|---|---|---|---|
| US 2013132603 A1 | 23-05-2013 | CN 103959698 A | 30-07-2014 |
| | | EP 2783477 A1 | 01-10-2014 |
| | | JP 2015502711 A | 22-01-2015 |
| | | KR 20140097417 A | 06-08-2014 |
| | | US 2013132603 A1 | 23-05-2013 |
| | | WO 2013078226 A1 | 30-05-2013 |

EPO FORM P0459

For more details about this annex : see Official Journal of the European Patent Office, No. 12/82

**EP 3 018 872 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2511301 A